(19) Europäisches Patentamt
European Patent Office
Office européen des brevets

(11) **EP 4 692 410 A1**

(12) **EUROPEAN PATENT APPLICATION**
published in accordance with Art. 153(4) EPC

(43) Date of publication:
**11.02.2026  Bulletin 2026/07**

(21) Application number: **24780914.8**

(22) Date of filing: **29.03.2024**

(51) International Patent Classification (IPC):
*C23C 2/06* (2006.01)        *B32B 15/08* (2006.01)
*B32B 27/18* (2006.01)

(52) Cooperative Patent Classification (CPC):
**B32B 15/08; B32B 27/18; C23C 2/06**

(86) International application number:
**PCT/JP2024/013329**

(87) International publication number:
**WO 2024/204821 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023  JP 2023056125**

(71) Applicant: **Nippon Steel Corporation
Tokyo 1008071 (JP)**

(72) Inventors:
• **KAWAMURA, Yasuaki
Tokyo 100-8071 (JP)**

• **FUJII, Takashi
Tokyo 100-8071 (JP)**
• **TOSHIN, Kunihiko
Tokyo 100-8071 (JP)**
• **UENO, Shin
Tokyo 100-8071 (JP)**
• **UEDA, Daichi
Tokyo 100-8071 (JP)**

(74) Representative: **Vossius & Partner
Patentanwälte Rechtsanwälte mbB
Siebertstrasse 3
81675 München (DE)**

(54) **SURFACE-TREATED STEEL SHEET**

(57)    A surface-treated steel sheet including a zinc-based coated steel sheet and a paint film placed on at least one main surface of the zinc-based coated steel sheet, in which an average thickness of the paint film is from 0.5 $\mu$m to 3 $\mu$m, the paint film includes a binder resin and from 0.5 to 2.0% by mass of a lubricant, and a ratio of a maximum thickness to a minimum thickness of the paint film is from 10 times to 100 times.

FIG. 1

EP 4 692 410 A1

**Description**

Technical Field

The present disclosure relates to a surface-treated steel sheet.

Background Art

Surface-treated steel sheets are, for example, press-formed, then assembled into desired shapes by spot welding or the like, thereafter electrodeposition-coated, or intermediate-coated in the case of omission of such electrodeposition-coating, and applied to automobile members.

Corrosion resistance of automobile members is often ensured with chemical conversion-treated films by chemical conversion treatment steps and electrodeposition-paint films by subsequent electrodeposition-coating steps. However, portions with no creeping of chemical conversion-treated films and electrodeposition-paint films may be generated in joining portions (sheet-joining portions) of forming materials of surface-treated steel sheets, in particular, sheet-joining portions and folded hem portions of inner surfaces of bag-shaped members. In this case, such joining portions of forming materials are highly likely to be exposed in a state of nakedness to corrosion environments. Therefore, there is a need for a surface-treated steel sheet capable of ensuring corrosion resistance.

Such surface-treated steel sheets are, for example, press-formed, then assembled into desired shapes by spot welding or the like, and thereafter electrodeposition-coated, or intermediate-coated in the case of omission of such electrodeposition-coating. Therefore, it is necessary to increase press formability, make paint films conductive so that resistance welding or electrodeposition-coating is possible, and impart corrosion resistance.

Thus, surface-treated steel sheets need to have weldability increased by making paint films conductive so that resistance welding is possible, and also to have corrosion resistance imparted.

For example, Patent Literature 1 proposes "a surface-treated steel sheet having a paint film on at least one surface of a coated steel sheet, wherein the paint film includes a binder resin, a V-containing non-oxide ceramic particle (except for a VC particle), and a doped zinc oxide particle, and the contents of the V-containing non-oxide ceramic particle and the doped zinc oxide particle, with respect to the paint film, satisfy the following Formulas:

$$C_{Zn} \geq 10.0 \qquad \ldots (1)$$

$$CV \leq 0.5 \cdot C_{Zn} \qquad \ldots (2)$$

$$CV \leq 70 \text{-} C_{Zn} \qquad \ldots (3)$$

$$CV \geq 0.125 \cdot C_{Zn} \qquad \ldots (4)$$

$$CV \geq 2.0 \qquad \ldots (5)$$

provided that CV and CZn respectively mean the content (% by mass) of the V-containing non-oxide ceramic particle and the content (% by mass) of the doped zinc oxide particle.".

Patent Literature 1 describes "a surface-treated steel sheet excellent in both corrosion resistance before electrodeposition-coating, and weldability can be provided".

Automobile members are obtained by assembly of surface-treated steel sheets into desired shapes by, for example, press forming and then spot welding. Therefore, slidability also needs to be imparted to surface-treated steel sheets in order to increase press formability.

Citation List

Patent Literature

Patent Literature 1: WO 2018/092244

SUMMARY OF INVENTION

Technical Problem

Surface-treated steel sheets widely utilized in applications of not only automobile members, but also mechanical members, home-appliance members, building materials and the like, need to be increased in corrosion resistance, weldability, and slidability.

However, various research and developments including those in Patent Literature 1 described above have been conventionally made, but surface-treated steel sheets are currently desired to be further improved in corrosion resistance, weldability, and slidability due to current requirements.

An object of the disclosure is to provide a surface-treated steel sheet excellent in all of corrosion resistance, weldability, and slidability.

Solution to Problem

Solutions for solving the above problems include the following aspects.

<1> A surface-treated steel sheet, including:

a zinc-based coated steel sheet; and
a paint film placed on at least one main surface of the zinc-based coated steel sheet, wherein:

an average thickness of the paint film is from 0.5 $\mu$m to 3 $\mu$m,
the paint film includes a binder resin and from 0.5 to 2.0% by mass of a lubricant, and
a ratio of a maximum thickness to a minimum thickness of the paint film is from 10 times to 100 times.

<2> The surface-treated steel sheet according to <1>, wherein:

the zinc-based coated steel sheet is an alloyed molten galvanized steel sheet, and
a ratio $\zeta/\delta$ of a $\zeta$ phase to a $\delta$ phase in the alloyed molten galvanized layer is from 0.1 to 0.4.

<3> The surface-treated steel sheet according to <1> or <2>, wherein:

the paint film includes the binder resin, a conductive pigment, the lubricant, and a rust inhibitor,
the conductive pigment is a doped oxide particle,
an average particle size of the conductive pigment is from 0.1 $\mu$m to 2 $\mu$m, and
a content of the conductive pigment is from 2 to 30% by mass with respect to the paint film.

<4> The surface-treated steel sheet according to <3>, wherein:
the doped oxide particle is a doped zinc oxide particle.
<5> The surface-treated steel sheet according to <3> or <4>, wherein:
the lubricant is polyolefin wax.
<6> The surface-treated steel sheet according to any one of <3> to <5>, wherein
the rust inhibitor is an organic acid.
<7> The surface-treated steel sheet according to any one of <1> to <6>, wherein:
the paint film does not include an inorganic substance other than a Zn-containing compound that includes a doped zinc oxide particle, or includes 1% by mass of the inorganic substance with respect to the paint film even in a case of including the inorganic substance.
<8> The surface-treated steel sheet according to any one of <1> to <7>, wherein:
a surface roughness Ra on a surface of the paint film is from 0.1 to 10 $\mu$m.

Advantageous Effect of Invention

According to the disclosure, a surface-treated steel sheet excellent in all of corrosion resistance, weldability, and slidability can be provided.

BRIEF DESCRIPTION OF DRAWINGS

[FIG. 1] FIG. 1 is a schematic cross-sectional view illustrating one example of the surface-treated steel sheet according to the present embodiment.

[FIG. 2] FIG. 2 is a schematic cross-sectional view illustrating another example of the surface-treated steel sheet according to the embodiment.

[FIG. 3] FIG. 3 is a cross-sectional view illustrating one example of the coating member according to the embodiment.

[FIG. 4] FIG. 4 is a schematic plan view illustrating a joining test piece produced in a corrosion resistance test 2 in Examples.

[FIG. 5] FIG. 5 is a schematic side view illustrating a joining test piece produced in a corrosion resistance test 2 in Examples.

## DESCRIPTION OF EMBODIMENTS

Hereinafter, an embodiment as one example of the disclosure is described.

Herein, a case in which the lower limit value of the content of each element in a chemical compositional ratio is designated as "0" means that such each element is an optional component and need not be contained.

A case in which numerical values described before and after "to" in a numerical value range expressed with "(from) ... to ... " are not provided with "more than" and "less than" means a range including these numerical values respectively as the lower limit value and the upper limit value. A numerical value range in a case in which numerical values described before and after "to" are provided with "more than" and "less than" means a range not including these numerical values respectively as the lower limit value and the upper limit value.

The upper limit value in a certain numerical value range described stepwise, as a numerical value range described stepwise, may be replaced with the upper limit value in any other numerical value range described stepwise, or may be replaced with any value described in Examples. The lower limit value in a certain numerical value range described stepwise may be replaced with the lower limit value in any other numerical value range described stepwise, or may be replaced with any value described in Examples.

The term "step" includes not only an independent step, but also any step as long as such any step achieves a predetermined object of such an independent step even in the case of being indistinguishable from other steps.

<Surface-Treated Steel Sheet>

The surface-treated steel sheet according to the embodiment includes

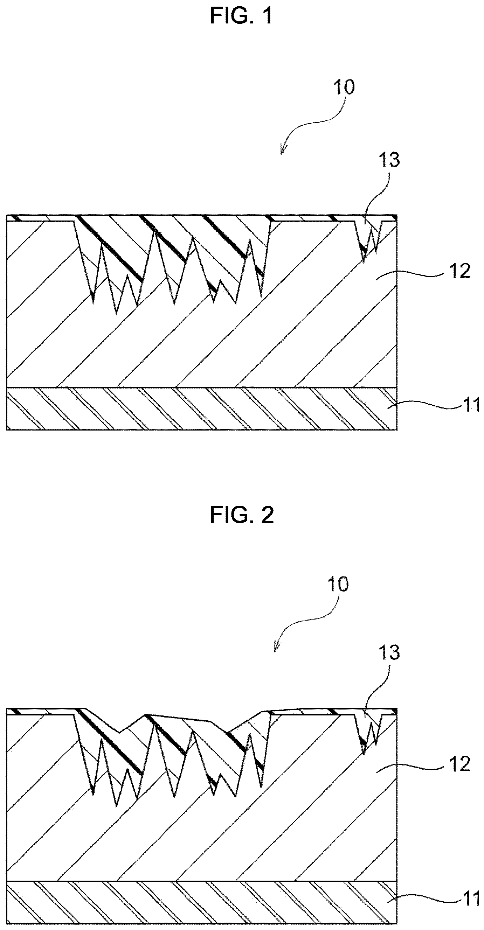

a zinc-based coated steel sheet, and
a paint film placed on at least one main surface of the zinc-based coated steel sheet (see FIG. 1 to FIG. 2), wherein
the average thickness of the paint film is from 0.5 $\mu$m to 3 $\mu$m,
the ratio of the maximum thickness to the minimum thickness of the paint film is from 10 times to 100 times.

In FIG. 1 to FIG. 2, 10 represents the surface-treated steel sheet, 11 represents a matrix steel sheet (an objective steel sheet on which the zinc-based plated layer is to be formed) in the zinc-based coated steel sheet, 12 represents a zinc-based plated layer of the zinc-based coated steel sheet, and 13 represents the paint film.

Herein, the main surface of the zinc-based coated steel sheet means opposite two surfaces in the thickness direction of the zinc-based coated steel sheet.

The surface-treated steel sheet according to the embodiment has the above configuration and therefore serves as a surface-treated steel sheet excellent in all of corrosion resistance, weldability, and slidability. The surface-treated steel sheet according to the embodiment has been found based on the following findings.

The inventors have made studies about corrosion resistance, weldability, and slidability of the surface-treated steel sheet. As a result, the following findings have been obtained.

A surface-treated steel sheet to be applied to applications of automobile components and the like has heretofore tried to ensure corrosion resistance, weldability, and slidability by not only a paint film provided on a coated steel sheet, but also the type and amount of a conductive pigment in such a paint film, and the thickness of such a paint film. However, further studies are needed in order to improve corrosion resistance, weldability, and slidability.

A coated steel sheet is then set in which a zinc-based coated steel sheet provided with a paint film having an average thickness of from 0.5 to 3 $\mu$m is applied to at least one main surface and the ratio of the maximum thickness to the minimum thickness of the paint film is from 10 times to 100 times. In other words, an asperity is formed on a surface of a plated layer of the zinc-based coated steel sheet and the surface is coated with a raw material of the paint film, whereby the raw material of the paint film penetrates into the asperity. Thereafter, the paint film can be formed by drying and baking, and the ratio of the maximum thickness to the minimum thickness of the paint film can be set to from 10 times to 100 times. Such a configuration not only allows corrosion resistance to be kept on a concave portion of a plated layer with a thick paint film, but also allows conductivity to be kept on a convex portion of a plated layer with a thin paint film, whereby corrosion resistance and weldability of the entire steel sheet are improved.

It has been found from the above findings that the surface-treated steel sheet according to the embodiment is a surface-treated steel sheet excellent in all of corrosion resistance, weldability, and slidability.

Hereinafter, the detail of the surface-treated steel sheet according to the embodiment is described.

(Zinc-Based Coated Steel Sheet)

The zinc-based coated steel sheet is a coated steel sheet including a zinc-based plated layer having zinc as a major component, on one surface or both surfaces of a matrix steel sheet.

Examples of the zinc-based coated steel sheet include a molten galvanized steel sheet, an alloyed molten galvanized steel sheet, a zinc-aluminum-magnesium-based molten galvanized steel sheet, a zinc-aluminum-magnesium-silicon-based molten galvanized steel sheet, a zinc-aluminum molten galvanized steel sheet, or a zinc-aluminum-silicon-based molten galvanized layer. Examples of zinc-based coated steel sheet also include an electrolytic galvanized steel sheet such as an electrolytic galvanized steel sheet or an electrolytic zinc-nickel alloy- coated steel sheet.

Among them, the zinc-based coated steel sheet is preferably an alloyed molten galvanized steel sheet from the viewpoint of an improvement in corrosion resistance.

The matrix steel sheet (an objective steel sheet on which the zinc-based plated layer is to be formed) of the zinc-based coated steel sheet is not particularly limited. The matrix steel sheet may be a hot-rolled steel sheet obtained by hot-rolling a slab having an appropriate chemical compositional ratio of steel, a cold-rolled steel sheet obtained by cold-rolling such a hot-rolled steel sheet, or the like. The strength of the matrix steel sheet can be, for example, from 270 to 1470 MPa in terms of a tensile strength class.

The thickness of the matrix steel sheet is not particularly limited, and is preferably from 0.4 to 3.2 mm, more preferably from 0.5 to 2.4 mm.

The thickness of the zinc-based coated steel sheet is measured with a micrometer (CPM-MX manufactured by Mitutoyo Corporation).

The amount of plating attached per one surface of the zinc-based coated steel sheet is preferably from 20 to 100 $g/m^2$, more preferably from 25 to 80 $g/m^2$, still more preferably from 30 to 60 $g/m^2$.

In a case in which the amount of plating attached is 20 $g/m^2$ or more, corrosion resistance is improved. In this regard, in a case in which the amount of plating attached is 100 $g/m^2$ or less, not only peeling at an interface between the zinc-based plated layer and the matrix steel sheet during pressing or deterioration in slidability due to a cohesive failure in the zinc-based plated layer is suppressed, but also the contact area between an electrode and the surface-treated steel sheet is reduced during welding, whereby deterioration in weldability is suppressed.

The amount of plating attached can be measured by the following method.

The amount of a plated layer attached can be measured by dissolving the plated layer in an acid solution to which an inhibitor (for example, trade name: Ibit 700A manufactured by ASAHI Chemical Co., Ltd.) for suppression of corrosion of base iron, and determining the change in weight before and after such acid pickling. In a case in which a paint film is present, the amount can be measured by performing the above operation after removal of such a paint film by a chemical product (remover or the like) or resin shot.

The thickness of the zinc-based plated layer in the zinc-based coated steel sheet is preferably from 2 to 20 $\mu$m, more preferably from 3 to 15, still more preferably from 4 to 10.

In a case in which the thickness of the zinc-based plated layer is 2 $\mu$m or more, corrosion resistance is improved. In this regard, in a case in which the thickness of the zinc-based plated layer is 20 $\mu$m or less, not only peeling at an interface of zinc-based plated layer/matrix steel sheet or deterioration in slidability due to a cohesive failure in the zinc-based plated layer is suppressed, but also the contact area between an electrode and the matrix steel sheet is reduced during welding, whereby deterioration in weldability is suppressed.

The thickness of the zinc-based plated layer can be measured by cross section observation.

In a case in which the zinc-based coated steel sheet is an alloyed molten galvanized layer, the ratio $\zeta/\delta$ (the value of the ratio) of the $\zeta$ phase to the $\delta$ phase is preferably from 0.1 to 0.4.

In a case in which the ratio ($\zeta/\delta$) of the $\zeta$ phase to the $\delta$ phase is 0.1 or more, the asperity of the alloyed molten galvanized layer is increased. The reason for this is because a $\zeta$ phase containing a crystal grain having a relatively large aspect ratio is generated in a certain amount or more in a surface of the alloyed molten galvanized layer (a surface opposite to an interface between the alloyed molten galvanized layer and the matrix steel sheet), the surface corresponding to a surface of the zinc-based coated steel sheet. As a result, the asperity along with generation of the $\zeta$ phase is relatively much formed on a surface of the alloyed molten galvanized layer (a surface opposite to an interface between the alloyed molten galvanized layer and the matrix steel sheet), the surface corresponding to a surface of the zinc-based coated steel sheet. The asperity in the surface of the zinc-based coated steel sheet allows a relatively thin portion to be formed in a paint film in the case of such a paint film formed on the surface, and thus a conducting path during welding is easily endured and therefore weldability is improved. In this regard, in a case in which the ratio ($\zeta/\delta$) of the $\zeta$ phase to the $\delta$ phase is 0.4 or less, the alloyed molten galvanized layer is hard. The reason for this is because the amount of generation of a relatively soft $\zeta$ phase is restricted to a certain amount or less in the alloyed molten galvanized layer. The $\zeta$ phase is relatively soft and therefore may adhere to a mold during press forming. The amount of generation of the $\zeta$ phase is restricted to a certain amount or less in a surface of the alloyed molten galvanized layer (a surface opposite to an interface between the alloyed molten galvanized layer and the matrix steel sheet), the surface corresponding to a surface of the zinc-based coated steel sheet, whereby a plating component hardly adheres to a mold during press forming, and slidability is improved.

Therefore, in a case in which an alloyed molten galvanized steel sheet is used and the proportion ($\zeta/\delta$) of the $\zeta$ phase in the alloyed molten galvanized layer is in the above range, the asperity of the surface of the alloyed molten galvanized layer is increased, the ratio of the maximum thickness to the minimum thickness of the paint film can be adjusted in the above range, and corrosion resistance and weldability are easily improved. In addition, slidability is also easily improved.

The ratio $\zeta/\delta$ of the $\zeta$ phase to the $\delta$ phase is preferably more than 0.125, or may be 0.126 or more, in particular from the viewpoint of suppression of progression of corrosion in terms of corrosion resistance. In a case in which the ratio $\zeta/\delta$ of the $\zeta$ phase to the $\delta$ phase is 0.1 or more, the effect of suppressing the occurrence of red rust is confirmed, and in a case in which the ratio $\zeta/\delta$ is more than 0.125, not only the occurrence of red rust is suppressed, but also progression of corrosion can be suitably suppressed.

In a case in which the zinc-based coated steel sheet is an alloyed molten galvanized layer, the ratio $\zeta/\Gamma$ of the $\zeta$ phase to the $\Gamma$ phase is preferably from 1.0 to 20.0.

In a case in which the ratio ($\zeta/\Gamma$) of the $\zeta$ phase to the $\Gamma$ phase is 1.0 or more, the asperity of the alloyed molten galvanized layer is increased. The reason for this is because a $\zeta$ phase containing a crystal grain having a relatively large aspect ratio is generated in a certain amount or more in a surface of the alloyed molten galvanized layer (a surface opposite to an interface between the alloyed molten galvanized layer and the matrix steel sheet), the surface corresponding to a surface of the zinc-based coated steel sheet. As a result, the asperity along with generation of the $\zeta$ phase is relatively much formed on a surface of the alloyed molten galvanized layer (a surface opposite to an interface between the alloyed molten galvanized layer and the matrix steel sheet), the surface corresponding to a surface of the zinc-based coated steel sheet. The asperity in the surface of the zinc-based coated steel sheet allows a relatively thin portion to be formed in a paint film in the case of such a paint film formed on the surface, and thus a conducting path during welding is easily endured and therefore weldability is improved. In this regard, a case in which the ratio ($\zeta/\Gamma$) of the $\zeta$ phase to the $\Gamma$ phase is 20.0 or less is preferred because the alloyed molten galvanized layer is hard.

Therefore, the ratio $\zeta/\Gamma$ of the $\zeta$ phase to the $\Gamma$ phase is preferably in the above range, more preferably from 2.0 to 10.0.

The ratio ($\zeta/\delta$) of the $\zeta$ phase to the $\delta$ phase and the ratio ($\zeta/\Gamma$) of the $\zeta$ phase to the $\Gamma$ phase can be adjusted by the alloying temperature and the alloying time.

In the alloyed molten galvanized layer, the $\zeta$ phase is an iron/zinc intermetallic compound phase and is a phase mainly containing $FeZn_{13}$.

The $\delta$ phase is an iron/zinc intermetallic compound phase and is a phase mainly containing from $FeZn_7$ to $FeZn_{10}$.

The $\Gamma$ phase is an iron/zinc intermetallic compound phase and is a phase mainly containing $Fe_3Zn_{10}$.

The $\zeta$ phase, the $\delta$ phase, and the $\Gamma$ phase can be identified by confirming the presence of diffraction peaks respectively assigned to these phases according to an X-ray diffraction (XRD) method.

The ratio ($\zeta/\delta$) of the $\zeta$ phase to the $\delta$ phase, and the ratio ($\zeta/\Gamma$) of the $\zeta$ phase to the $\Gamma$ phase are measured as follows.

First, the paint film is removed with methyl ethyl ketone (MEK). After removal, the weight of the zinc-based coated steel sheet is measured.

Thereafter, constant potential electrolysis at -1030 mV, of a saturated calomel electrode, is carried out. After a diffraction peak intensity assigned to a $\zeta$ phase component is less than the background and disappearance of the $\zeta$ phase is confirmed in X-ray diffraction, weight measurement is carried out to measure the content of the $\zeta$ phase.

Subsequently, constant potential electrolysis at -940 mV, of a saturated calomel electrode, is carried out. After a diffraction peak intensity assigned to a $\delta$ phase component is less than the background and disappearance of the $\delta$ phase is confirmed in X-ray diffraction, weight measurement is carried out to measure the content of the $\delta$ phase.

Thereafter, 5% hydrochloric acid containing 0.1 g/L of an inhibitor (trade name: Ibit 700A manufactured by ASAHI Chemical Co., Ltd.) for suppression of dissolution of iron is used for the coated steel sheet, thereby dissolving plating in the balance. After a diffraction peak intensity assigned to a $\Gamma$ phase component is less than the background and disappearance of the $\Gamma$ phase is confirmed in X-ray diffraction, weight measurement is carried out to measure the content of the $\Gamma$ phase.

The values respectively obtained by dividing the content of the $\zeta$ phase, the content of the $\delta$ phase, and the content of the $\Gamma$ phase determined above, by 7.15, 7.24, and 7.36 which are the gravities of the $\zeta$ phase, the $\delta$ phase, and the $\Gamma$ phase, are determined as the volumes of the $\zeta$ phase and the $\delta$ phase, the abundance ratio is calculated from these volumes, and the value ($\zeta/\delta$) of the ratio (volume ratio) of the $\zeta$ phase to $\delta$ phase and the value ($\zeta/\Gamma$) of the ratio (volume ratio) of the $\zeta$ phase to the $\Gamma$ phase are determined.

Conditions of the constant potential electrolysis are as follows.

· Working electrode: zinc-based coated steel sheet
· Counter electrode: platinum electrode
· Reference electrode: saturated calomel electrode
· Measurement temperature: 23°C

The X-ray diffraction is carried out according to a $\theta/2\theta$ measurement method, and conditions of the X-ray diffraction are as follows.

· Measurement tool: RINT2200 manufactured by Rigaku Corporation
· Characteristic X-ray: CoK$\alpha$ ray
· Voltage: 40 kV
· Current: 150 mA
· Measurement range in X-ray diffraction: $30° \leq 20 \leq 90°$
· Step: 1°/min

The zinc-based coated steel sheet can be obtained by, for example, obtaining a slab with continuous casting, hot-rolling the slab to obtain a hot-rolled sheet, winding the hot-rolled sheet, cold-rolling the hot-rolled sheet to a cold-rolled sheet, annealing the cold-rolled sheet, and applying plating treatment to the sheet after annealing. Continuous casting conditions, hot-rolling conditions, winding conditions, cold-rolling conditions, annealing conditions, and plating conditions may be conventionally known as common conditions.

Examples of a method of asperity-imparting to the zinc-based coated steel sheet can include a method of applying grinding to a zinc-based plated layer surface by use of a grinding brush, or a method including imparting a surface asperity to a surface of a cold-rolled sheet or an annealed sheet before plating, by a grid or the like, and then applying zinc electroplating thereto.

The method of asperity-imparting to the zinc-based coated steel sheet can control the ratio of the maximum thickness to the minimum thickness of the paint film to the above range.

The ratio of the maximum thickness to the minimum thickness of the paint film can be controlled by adjusting, for example, the type, the material, the shape, the size, the pressure, the rate, and the amount of projection of the grid.

Temper rolling (namely, skin-pass rolling) may be applied to a sheet subjected to plating treatment, in the method of producing the zinc-based coated steel sheet.

In a case in which temper rolling (namely, skin-pass rolling) is carried out, the area ratio of such a surface subjected to skin-pass is preferably from 20 to 80%, more preferably from 30 to 70%.

Temper rolling (namely, skin-pass rolling) is carried out so that the area ratio of such a surface subjected to skin-pass is in the above range, whereby a convex portion of a plated surface is a smooth surface, and, in a case in which a paint film is formed on an upper later, the ratio of the maximum thickness to the minimum thickness of the paint film is easily controlled to a range of from 10 times to 100 times.

The area ratio of such a surface subjected to skin-pass can be measured as the area ratio of a smooth portion by surface observation such as surface SEM analysis.

The method of forming the alloyed molten galvanized layer of the alloyed molten galvanized steel sheet is not particularly limited except for adjustment of the alloying temperature and the alloying time for imparting the asperity to the alloyed molten galvanized steel sheet.

The alloying temperature is preferably from 450 to 600°C, more preferably from 480 to 580°C. In a case in which the alloying temperature is 450°C or more, an excess time is not taken until predetermined alloying is achieved. In this regard, in a case in which the alloying temperature is 600°C or less, load reduction on alloying treatment facilities can be achieved.

The alloying time is preferably from 10 to 180 s, more preferably from 20 to 120 s. In a case in which the alloying time is 10 s or more, a predetermined alloyed molten galvanized layer cannot be made. In this regard, in a case in which the alloying time is 180 s or less, a predetermined alloyed molten galvanized layer can be formed without any decrease in productivity.

Accordingly, the alloying temperature and the alloying time are preferably in the above ranges because the ratio ($\zeta/\delta$) of the $\zeta$ phase to the $\delta$ phase and the ratio ($\zeta/\Gamma$) of the $\zeta$ phase to the $\Gamma$ phase can be controlled in the above ranges.

Such a zinc-based plated layer including an alloyed molten galvanized layer is formed with, for example, hot dipping. The zinc-based plated layer may be formed in any system of a continuous system or a batch system. After formation of the zinc-based plated layer, any treatment such as zero spangle treatment as appearance homogenization treatment, annealing treatment as modification treatment of the zinc-based plated layer, or temper rolling for surface state or material adjustment may be applied.

The zero spangle treatment can be carried out by, for example, misting molten zinc at a timing where the temperature of the molten zinc approaches the solidifying temperature thereof. In a case in which the zero spangle treatment is carried out in the above conditions, a molten galvanized steel sheet having a homogeneous surface appearance can be produced.

The temper rolling (namely, skin-pass rolling) can be carried out with, for example, a rolling apparatus including paired work rolls and a stand accommodating the paired work rolls. The rolling apparatus for use in the temper rolling may include a plurality of paired work rolls arranged in a line. The rolling apparatus for use in the temper rolling may be a multistage rolling machine. In particular, in a case in which the temper rolling is carried out in the above conditions, a convex portion in a plated surface is flattened. Thus, in a case in which a paint film is formed on an upper layer, the ratio of the maximum thickness to the minimum thickness of the paint film easily falls within a range of from 10 times to 100 times.

Any of hot dipping or zinc electroplating may be adopted in the plating treatment in the method of producing the zinc-based coated steel sheet as described above, and hot dipping is preferably adopted from the viewpoint that a relatively heavy coating weight is easily achieved and corrosion resistance is easily ensured by such a heavy coating weight.

(Paint Film)

The paint film includes at least a binder resin and a lubricant.

Specifically, the paint film preferably includes a binder resin, a conductive pigment, a lubricant, and a rust inhibitor. The paint film may include, if necessary, any other component.

-Binder Resin-

The binder resin may be any of a water-soluble or water-dispersible, water-based resin to be dissolved or dispersed in water, or a solvent-based resin to be dissolved or dispersed in an organic solvent, and is preferably the water-based resin in terms of production cost and environmental suitability.

Examples of the water-based resin include a water-soluble or water-dispersible resin such as a polyester resin, a urethane resin, a polyolefin resin, an acrylic resin, an epoxy resin, a phenol resin, or a mixed resin of two or more of these resins.

In the case of use of the polyester resin, the molecular weight is preferably from 10000 to 30000. In a case in which the molecular weight is 10000 or more, sufficient processability can be ensured. In this regard, in a case in which the molecular weight is 30000 or less, a binding site in the resin itself is increased, and excellent adhesiveness with an electrodeposition-paint film can be ensured. In the case of crosslinking by use of a curing agent such as melamine, a crosslinking reaction is sufficiently performed, and the performance of the paint film can be ensured. The molecular weight of the polyester resin is here the weight average molecular weight.

In the case of use of the urethane resin, the form of the urethane resin is preferably an emulsion having an emulsion particle size of from 10 to 100 nm (preferably from 20 to 60 nm). In a case in which the emulsion particle size is 10 nm or more, an increase in cost is suppressed. In this regard, in a case in which the emulsion particle size is 100 nm or less, a gap between such emulsions is small in a paint film formed and barrier properties of the paint film can be ensured. Examples of the type of the urethane resin include ether, polycarbonate, ester, or acrylic graphite type. These may be used singly, or in combination thereof.

Examples of the solvent-based resin include a polyester resin, a urethane resin, an epoxy resin, an acrylic resin, or a mixed resin of two or more of these resins.

The binder resin may be a crosslinked resin having a crosslinked structure, or may be a non-crosslinked resin not having a crosslinked structure, and is preferably the non-crosslinked resin in terms of low-temperature formation of the paint film. The crosslinking agent (curing agent) which imparts a crosslinked structure to the binder resin is preferably a water-soluble crosslinking agent. The crosslinking agent is specifically preferably melamine, isocyanate, a silane compound, a zirconium compound, a titanium compound, or the like.

The amount of the crosslinking agent added, with respect to 100 parts by mass of the resin solid content, is preferably from 5 parts by mass to 30 parts by mass. In a case in which the amount of the crosslinking agent added is 5 parts by mass or more, a crosslinking reaction with the binder resin is ensured, and the performance of the paint film is sufficient. In this regard, in a case in which the amount of the crosslinking agent added is 30 parts by mass or less, the paint film is inhibited from being excessively hard due to excess progression of such a crosslinking reaction. Thus, processability can be ensured. Coating material stability of the silane compound, the zirconium compound, or the titanium compound can also be ensured.

The content of the binder resin with respect to the paint film (the entire solid content of the paint film) is preferably from 50.0 to 90.0% by mass. In a case in which the content of the binder resin is 50.0% by mass or more, the function of the binder is easily expressed, and the aggregation force of the paint film is improved. Thus, cohesion in the paint film (a cohesive failure of the paint film) hardly occurs when an adhesiveness test and forming processing are performed. In this regard, in a case in which the content of the binder resin is 90.0% by mass or less, a pigment component included in the paint film is decreased in ratio, and all of weldability, corrosion resistance, and adhesiveness with an electrodeposition-paint film are easily satisfied.

The content of the binder resin with respect to the paint film (the entire solid content of the paint film) is more preferably from 55.0 to 85.0% by mass from the viewpoint that the binder function is expressed and also all of weldability, corrosion resistance, and adhesiveness with an electrodeposition- paint film are satisfied.

-Conductive Pigment-

In a case in which the conductive pigment is included in the paint film, weldability is improved.

Examples of the conductive pigment include an oxide particle (doped zinc oxide particle, doped tin oxide particle, tin oxide-titanium oxide composite particle, tin oxide-barium sulfate composite particle, nickel oxide-aluminum composite particle, or the like), a non-oxide ceramics particle (boride ceramics, carbide ceramics, nitride ceramics, and silicide ceramics, or the like), an iron alloy particle (ferrosilicon particle or the like), a stainless particle, a particle of one other than an iron alloy (particle of metal such as zinc, nickel, iron, aluminum, cobalt, manganese, copper, or tin, or any alloy thereof, or the like), a carbon particle (conductive carbon, graphite powder, or the like), or carbide (titanium carbide, silicon carbide, or the like).

Among these, a doped oxide particle is preferred, and a doped zinc oxide particle is more preferred from the viewpoint of an improvement in weldability.

The doped zinc oxide particle is a conductive zinc oxide particle.

Examples of the doped zinc oxide particle include a particle which expresses conductivity by doping a zinc oxide particle with at least one element (hereinafter, also referred to as "doped element") selected from the group consisting of Group 13 elements in the periodic table and Group 15 elements in the periodic table.

Examples of the Group 13 elements in the periodic table include B, Al, Ga, and In. Examples of the Group 15 elements in the periodic table include P and As. Among these, the doped element is preferably Al or Ga in terms of an improvement in conductivity. The doped element is more preferably Al furthermore from the viewpoint of cost.

The content of the doped element, with respect to an undoped zinc oxide particle, is preferably from 0.05 to 5% by atom, more preferably from 0.1 to 5% by atom in terms of an improvement in conductivity.

The average particle size of the conductive pigment is preferably from 0.1 to 2 $\mu$m, more preferably from 0.2 to 1.5 $\mu$m, still more preferably from 0.4 to 1.0 $\mu$m.

In a case in which the average particle size of the conductive pigment is 0.1 $\mu$m or more, a welding electrode is easily in contact with the zinc-based plated layer of the zinc-based coated steel sheet during welding, and weldability is reduced. In this regard, in a case in which the average particle size of the conductive pigment is 2 $\mu$m or less, the conductive pigment is hardly homogeneously in contact with a welding electrode (for example, Cu electrode) during welding, and as a result, the welding electrode is easily in contact with the zinc-based plated layer of the zinc-based coated steel sheet, and weldability is reduced.

The "average particle size" of the conductive pigment refers to an average primary particle size in a case in which the conductive pigment is singly present in the paint film, or means an average secondary particle size representing the particle size of the conductive pigment during aggregation in a case in which such conductive pigments are aggregated and present.

The average particle size of the conductive pigment is determined by the following measurement method.

First, a surface-treated steel sheet on which the paint film is formed is cut along with a sheet thickness direction, thereby exposing its cross section, and this cross section is further polished. The cross section thus obtained is observed with a scanning-type electron microscope, and an observation image of the cross section in the paint film is obtained. Twenty-five particles are arbitrarily selected from the doped zinc oxide particles present in a field of view of the observation image, and the long-side length and the short-side length of the conductive pigment in each of the particles are measured. Finally, the particle size is calculated from the arithmetic average with respect to each of the long-side length and the short-side length of each of the doped zinc oxide particles, and furthermore the particle sizes of the doped zinc oxide particles in the field of view are arithmetically averaged, whereby the average particle size is calculated. The doped zinc oxide particles present in the field of view of the observation image are identified as particles located in a region in which Al is detected, in a region in which Zn is detected in EPMA analysis of the field of view. The observation image is analyzed with image analysis software "Image J Ver.1.54f", and the long-side length, the short-side length, and the like of the doped zinc oxide particle are measured.

Observation conditions of the scanning-type electron microscope are as follows.

· Measurement apparatus: JSM-7200F manufactured by JEOL Ltd.
· Magnification: 5000x
· Acceleration voltage: 10 keV

The content of the conductive pigment is preferably from 2 to 30% by mass, more preferably from 3 to 25% by mass, still more preferably from 5 to 20% by mass with respect to the paint film (the entire solid content of the paint film).
In a case in which the content of the conductive pigment is 2% by mass or more, a welding electrode is easily in contact with the zinc-based plated layer of the zinc-based coated steel sheet during welding, and weldability is easily reduced. In this regard, in a case in which the content of the conductive pigment is 30% by mass or less, the ratio of the conductive pigment in the paint film is ensured, and the performance, such as weldability and corrosion resistance, is easily sufficient.

-Lubricant-

The lubricant not only can impart excellent lubricity to the paint film, but also can improve powdering resistance of the paint film. Examples of the lubricant include the following organic lubricants (1) to (2). The reason for this is because, in particular, application with the organic lubricant leads to burning and carbonizing due to heat during welding, and attachment to a welding electrode is made difficult. Among these, polyolefin wax capable of imparting high corrosion resistance is preferred.

(1) Polyolefin wax, paraffin wax: for example, polyethylene wax, synthetic paraffin, natural paraffin, microwax, or chlorinated hydrocarbon
(2) Fluororesin-based wax: for example, a polyfluoroethylene resin (polytetrafluoroethylene resin, or the like), a polyvinyl fluoride resin, or a polyvinylidene fluoride resin

In a case in which polyethylene wax is used as the lubricant, the average particle size is preferably from 0.5 to 10 $\mu$m. In a case in which the average particle size of the polyethylene wax is 0.5 $\mu$m or more, an increase in concentration of the polyethylene wax on a surface is suppressed, and deterioration in adhesiveness between the paint film and an electrodeposition- paint film can be suppressed. In this regard, in a case in which the average particle size of a solid lubricant is 10 $\mu$m or less, the polyethylene wax is inhibited from dropping from the paint film, and lubricity and corrosion resistance can be ensured. The average particle size of the solid lubricant is more preferably from 1 to 5 $\mu$m from the viewpoint that excellent adhesiveness between the paint film and an electrodeposition-paint film, corrosion resistance, lubricity, and powdering resistance are obtained.
The softening point of the lubricant is preferably from 100°C to 135°C, more preferably from 110°C to 130°C. In a case in which the softening point of the lubricant is from 100°C to 135°C, the lubricity and powdering resistance of the paint film are further improved.
The content of the lubricant, with respect to the paint film (the entire solid content of the paint film), is from 0.5 to 2% by mass. The content of the lubricant is preferably from 0.75 to 1.75% by mass, more preferably from 1.0 to 1.5% by mass.
In a case in which the content of the lubricant is 0.5% by mass or more, lubricity is sufficiently obtained. In this regard, in a case in which the content of the lubricant is 2% by mass or less, adhesiveness between the paint film and an electrodeposition-paint film, and corrosion resistance can be inhibited from deteriorating. Accordingly, the content of the lubricant is in the above range.

-Rust Inhibitor-

An organic rust inhibitor such as an organic acid, an organic acid salt, an amine salt, or an ester is applied as the rust inhibitor in order to impart high weldability. The reason for this is because application with the organic rust inhibitor leads to burning and carbonizing due to heat during welding, and attachment to a welding electrode hardly occurs. Among these, an organic acid capable of imparting high corrosion resistance is preferred.
Examples of the organic acid include carboxylic acid (tartaric acid, tannic acid, oleic acid, dimer acid, naphthalene acid, or the like), carboxylic acid metal soap (lanolin Ca, Zn naphthenate, a Ca or Ba salt of oxidized wax, or the like), or sulfonate (Na sulfonate, Ca sulfonate, Ba sulfonate).
Examples of the ester include glycerin ester, sorbitan monoisostearate, or sorbitan monooleate of a higher fatty acid.
The content of the rust inhibitor, with respect to the paint film (the entire solid content of the paint film), is preferably from 1 to 20% by mass. In a case in which the content of the rust inhibitor is 1% by mass or more, corrosion resistance is sufficiently improved. In this regard, in a case in which the content of the rust inhibitor is 20% by mass or less, deterioration in liquid stability of a coating material is suppressed.

The content of the rust inhibitor, with respect to the paint film (the entire solid content of the paint film), is more preferably from 5 to 15% by mass from the viewpoint of corrosion resistance and coating material stability.

(Other Components)

Examples of other components include a known additive such as a lubricant, a rust inhibitor, a silane coupling agent, or a leveling agent.

However, in a case in which an inorganic substance other than a Zn-containing compound that includes a doped zinc oxide particle is attached to a welding electrode during welding, weldability tends to deteriorate.

Accordingly, the paint film preferably does not include an inorganic substance other than a Zn-containing compound that includes a doped zinc oxide particle, or includes 1% by mass or lower of the inorganic substance with respect to the paint film even in the case of including the inorganic substance.

Examples of the inorganic substance other than a Zn-containing compound that includes a doped zinc oxide particle include silica, an inorganic acid, or an inorganic acid salt.

Herein, a metal salt of an organic substance (a metal salt of an organic acid, or the like) does not correspond to the inorganic substance other than a Zn-containing compound that includes a doped zinc oxide particle.

(Average Thickness of Paint Film)

The average thickness of the paint film is preferably from 0.5 to 3 $\mu$m, more preferably from 0.8 to 2.2 $\mu$m, still more preferably from 1.2 to 1.8 $\mu$m.

The average thickness of the paint film is measured as follows.

First, a surface-treated substrate having the paint film is cut along with the sheet thickness direction, thereby exposing its cross section, resin embedding is carried out, and then the cross section exposed is polished with a polishing machine. Au is vapor-deposited on the cross section after polishing, thereby producing a sample for cross section observation.

The cross section thus obtained is observed with a scanning-type electron microscope, and an observation image of the cross section in the paint film is obtained. The thickness of the paint film is measured at 10 positions in the observation image, and the arithmetic average value is calculated. In a case in which the thickness of the paint film is measured, the thickness is measured at 10 positions at an equal interval of 40 $\mu$m in a direction in which the paint film extends in the observation image.

Observation conditions of the scanning-type electron microscope are as follows.

· Measurement apparatus: JSM-7200F manufactured by JEOL Ltd.
· Magnification: 3000x
· Acceleration voltage: 10 keV

The ratio of the maximum thickness to the minimum thickness of the paint film is from 10 times to 100 times.

A ratio of the maximum thickness to the minimum thickness of the paint film (maximum thickness/minimum thickness), of less than 10 times, means that the asperity is small on a surface of the zinc-based coated steel sheet. Therefore, the thickness of the paint film is not sufficiently thin in a portion corresponding to a convex portion in a surface of the zinc-based coated steel sheet. Therefore, the thickness of the paint film in a portion corresponding to a convex portion in a surface of the zinc-based coated steel sheet is thick as compared with that of a case in which the ratio of the maximum thickness to the minimum thickness of the paint film (maximum thickness/minimum thickness) is 10 times or more, whereby a conducting point with an electrode during spot welding is decreased and thus weldability is reduced.

A ratio of the maximum thickness to the minimum thickness of the paint film (maximum thickness/minimum thickness), of more than 100 times, means that the asperity is large in a surface of the zinc-based coated steel sheet. Therefore, the thickness of the paint film is considerably thin in the vicinity of a portion corresponding to a convex portion in a surface of the zinc-based coated steel sheet, whereby such a thin portion easily serves as the origin of corrosion and corrosion resistance is reduced.

In a case in which the ratio of the maximum thickness to the minimum thickness of the paint film (maximum thickness/minimum thickness) is from 10 times to 100 times, it is meant that the asperity is moderately present in a surface of the zinc-based coated steel sheet. Therefore, the paint film moderately penetrates to the asperity, the thickness of the paint film is appropriately controlled in the portion corresponding to the convex portion, and not only conductivity between the welding electrode and the zinc-based coated steel sheet is ensured during welding, but also corrosion resistance can be ensured by the function of the paint film. The paint film also penetrates to a concave portion in a surface of the zinc-based coated steel sheet, and thus can also contribute to adhesiveness thereof to the zinc-based coated steel sheet.

The ratio of the maximum thickness to the minimum thickness of the paint film (maximum thickness/minimum thickness) is preferably 12 times or more, 15 times or more, 18 times or more, or still more preferably 20 times or more.

The ratio of the maximum thickness to the minimum thickness of the paint film (maximum thickness/minimum thickness) is preferably 80 times or less, 60 times or less, 50 times or less, still more preferably or 40 times or less.

The maximum thickness of the paint film is preferably from 5.0 to 10.0 $\mu$m from the viewpoint of improvements in weldability and corrosion resistance. The minimum thickness of the paint film is preferably from 0.05 to 0.25 $\mu$m from the viewpoint that corrosion resistance is ensured.

The ratio of the maximum thickness to the minimum thickness of the paint film is measured as follows.

A sample for cross section observation is produced in the same manner as in the method of measuring the average thickness of the paint film, and the resulting cross section is observed with a scanning-type electron microscope, thereby providing an observation image of the cross section of the paint film.

Next, a position with the maximum thickness and a position with the minimum thickness in the paint film in the observation image are identified, and the respective thicknesses at these positions are measured as the maximum thickness and the minimum thickness in the observation image.

The maximum thickness and the minimum thickness of the paint film in each observation image at 10 positions are determined, and the respective arithmetic average values of the maximum thickness and the minimum thickness in such each observation image are calculated. The ratio of the arithmetic average value of the maximum thickness and the arithmetic average value of the minimum thickness calculated is defined as "the ratio of the maximum thickness to the minimum thickness of the paint film".

The observation image of the cross section of the paint film to be measured may be taken at another position in the same cross section, or may be obtained by imaging a different cross section. The position for imaging may not be arbitrarily selected, but each of 10 positions may be randomly selected. The position for imaging may be, if necessary, set for 10 or more positions.

(Surface Feature of Paint Film)

A feature of the paint film is preferably flat as illustrated in FIG. 1.

Therefore, as a specific feature of the paint film, the surface roughness Ra of the paint film is preferably from 0.1 to 10 $\mu$m. The lower limit of the surface roughness Ra of the paint film may be 0.3 $\mu$m, 0.5 $\mu$m, or 0.7 $\mu$m, and is still more preferably 0.8 $\mu$m, 0.9 $\mu$m, or 1.0 $\mu$m. The upper limit of the surface roughness Ra of the paint film may be 2.0 $\mu$m or 1.4 $\mu$m, and is still more preferably 1.2 $\mu$m. The surface roughness Ra of the paint film is in the above range, whereby the ratio of the maximum thickness to the minimum thickness of the paint film can be easily controlled.

The method of measuring the surface roughness Ra of the paint film is as follows.

Measurement is performed with SURFCOM manufactured by TOKYO SEIMITSU CO., LTD., at a cutoff value of 0.8 mm according to parameters of JIS B 0601:2013.

(Formation of Paint Film)

The method of forming the paint film is not particularly limited, and a well-known method can be utilized. For example, a composition for paint film formation (coating material) is obtained in which the binder resin, the conductive pigment, the lubricant, and the rust inhibitor, and, if necessary, such other components are mixed in a solvent. The solvent may be water or an organic solvent, and is preferably water in terms of production cost and environmental suitability. In other words, the composition for paint film formation is preferably a water-based composition. At least one surface of the zinc-based coated steel sheet is coated with the composition for paint film formation, and a film obtained by coating (paint film) is dried, or dried and heated, whereby the paint film is formed. It is preferable that degreasing and water washing are applied to a zinc-based coated steel sheet surface before coating with the composition for paint film formation.

The coating with the composition for paint film formation is here made by use of a coating method, such as bar coating, roll coating, a blade coater, or a curtain coater.

The drying temperature of the paint film is preferably from 50 to 120°C, more preferably from 60 to 100°C in terms of the maximum achieving temperature of the zinc-based coated steel sheet surface.

The heating temperature of the paint film is preferably from 100 to 240°C, more preferably from 120 to 210°C in terms of the maximum achieving temperature of the zinc-based coated steel sheet surface.

<Other Aspects of Surface-Treated Steel Sheet>

The surface-treated steel sheet according to the embodiment may have an intermediate-paint film (a functional paint film such as a chemical-conversion-treated film) between the zinc-based coated steel sheet and the paint film.

The intermediate- paint film is preferably an intermediate-paint film containing a binder resin, a silane coupling agent, a silica fine particle, a phosphoric acid compound, and a fluorine compound, and having an average thickness of from 0.1 to 0.5 $\mu$m.

An intermediate-paint film that has the above compositional ratio and the above average thickness is included, whereby corrosion resistance can be improved relatively without loss in weldability. The reason for this is because a relatively small thickness of the intermediate-paint film has a small effect on weldability and leads to an improvement in adhesiveness between the coated steel sheet and the paint film, thereby resulting in an improvement in corrosion resistance.

Therefore, the surface-treated steel sheet according to the embodiment preferably has an intermediate-paint film (functional paint film) that has the above compositional ratio and the above thickness, between the zinc-based coated steel sheet and the paint film.

The average thickness of the intermediate-paint film is measured in the same manner as the average thickness of the paint film.

<Coating Member>

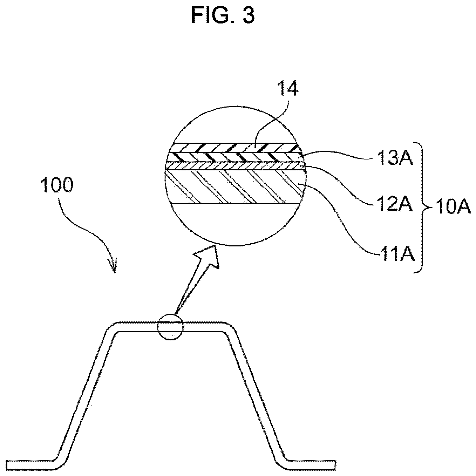

The coating member according to the embodiment includes a forming material in which the surface-treated steel sheet according to the embodiment is formed, and an electrodeposition-paint film formed on a paint film of the forming material (namely, the paint film of the surface-treated steel sheet) (see FIG. 3).

In FIG. 3, 100 represents the coating member, 10A represents the forming material, 11A represents a matrix steel sheet (an objective steel sheet on which the zinc-based plated layer is to be formed) in the forming material, 12A represents a zinc-based plated layer of the forming material, 13A represents the paint film of the forming material, and 14 represents the electrodeposition-paint film. FIG. 3 illustrates an example of a coating member in which a predetermined cross section has a hut shape, but the whole shape of the coating member and the cross section shape are not particularly limited, and the coating member may have any shape.

The coating member according to the embodiment is produced, for example, as follows. First, for example, a well-known forming technique including cutting and press forming is utilized to form the surface-treated steel sheet, whereby an objectively shaped forming material is formed. The forming material may be, if necessary, assembled into a desired shape by welding (spot welding or the like).

Next, electrodeposition-coating treatment is applied to a paint film of the forming material. Thus, an electrodeposition-paint film is formed on the paint film. The electrodeposition-coating treatment may be any of anionic electrodeposition-coating or cationic electrodeposition-coating, and a cationic electrodeposition-coating material is preferred in terms of corrosion resistance.

In particular, in a case in which an electrodeposition-paint film is formed by cationic electrodeposition-coating treatment with a water-based coating material including a resin [for example, a water-based resin (for example, a known water-based resin such as an acrylic resin, a polyester resin, an alkyd resin, an epoxy resin, or a polyurethane resin) having a hydrophilic group such as a carboxyl group, a hydroxyl group, a methylol group, an amino group, a sulfonic acid group, or a polyoxyethylene bond, and a functional group reactive with a curing agent, such as a hydroxyl group], such a curing agent (a melamine resin, a block polyisocyanate, or the like), and any other additive (any known additive such as a coloring pigment, an optically coherent pigment, an extender pigment, a dispersant, an antisettling agent, a reaction promoter, a defoamer, a thickener, a rust inhibitor, an ultraviolet absorber, or a surface conditioner), adhesiveness between the paint film and the electrodeposition-paint film is easily improved.

Thereafter, any other paint film such as an intermediate-paint film or an overpaint film may be, if necessary, formed on the electrodeposition-paint film of the forming material.

The coating member according to the embodiment is produced through these steps.

The forming material in which the paint film is formed may be subjected to chemical conversion treatment (for example, phosphate treatment, Zr treatment, or the like) after degreasing and surface conditioning of the paint film, before electrodeposition-coating. The chemical conversion treatment can be applied, thereby forming a chemical conversion-treated film in a required region other than the paint film, although such a chemical conversion-treated film is hardly formed on the paint film. Accordingly, adhesiveness of the electrodeposition-paint film can be improved as a whole forming material (coating member).

The coating member according to the embodiment is widely utilized in applications of automobile members (automobile bodies, underbody members, or the like), mechanical members (housings or the like), home-appliance members (housings or the like), building materials (roofs, walls, or the like), or the like.

Examples

Hereinafter, the disclosure is further described with reference to Examples, but the disclosure is not limited to the following Examples. Various conditions can be adopted in the disclosure without departing from the gist of the disclosure as long as the objects of the disclosure are achieved.

<Examples>

1. Production of Surface-Treated Steel Sheet

1.1 Preparation of Zinc-Based Coated Steel Sheet

The following five types of zinc-based coated steel sheets were prepared, and were each immersed in an aqueous solution (2.5% by mass, 40°C) of a water-based alkaline degreasing agent (FC-301 manufactured by Nippon Parkerizing Co., Ltd.) for 2 minutes, to perform surface degreasing, and thereafter washed with water and dried, thereby providing each zinc-based coated steel sheet for surface treatment.
Here, a cold-rolled steel sheet was also prepared as a steel sheet for surface treatment.

ZA: Alloyed molten galvanized steel sheet (thickness 0.8 mm)
ZB: Molten galvanized steel sheet (thickness 0.8 mm)
ZC: Zn-Al-Mg-ternary molten galvanized steel sheet (Zn-11%, Al-3%, Mg-0.2%, Si) (thickness 0.8 mm, amount of plating attached 60 g/m$^2$) (steel sheet subjected to grid treatment before plating)
ZD: Zinc/nickel alloy- coated steel sheet (10% by mass of Ni, thickness 0.8 mm)
ZE: Zinc/nickel alloy- coated steel sheet (steel sheet subjected to grid treatment before plating, 10% by mass of Ni, thickness 0.8 mm)
C: Cold-rolled steel sheet (thickness 0.8 mm, no plating)

Table 2 shows the amount of plating attached. Control of the amount attached was carried out by adjusting the rate of lifting of plating during plating production and the amount of wiping.
Table 2 shows the ratio ($\zeta/\delta$) of the $\zeta$ phase to the $\delta$ phase in the plated layer of the alloyed molten galvanized steel sheet. Control of the ratio ($\zeta/\delta$) of the $\zeta$ phase to the $\delta$ phase, and the ratio ($\zeta/\Gamma$) of the $\zeta$ phase to the $\Gamma$ phase was carried out by adjusting the alloying temperature and the alloying time as shown in Table 2.

1.2 Formation of Intermediate-Paint Film (Chemical Conversion-Treated Film)

Next, the following treatment liquid S for chemical conversion treatment was prepared, the zinc-based coated steel sheet or the cold-rolled steel sheet was coated with the liquid with variation in count of bar coating so that the amount attached shown in Table 2 was achieved, and thereafter the resultant was air-dried by heating and drying in a hot-air oven so that the achieving temperature of a surface of the zinc-based coated steel sheet or the cold-rolled steel sheet was 70°C, whereby a chemical conversion-treated film was formed on the surface of the zinc-based coated steel sheet or the cold-rolled steel sheet. The average thickness of the chemical conversion-treated film was 0.2 $\mu$m.
Herein, formation of such an intermediate-paint film was not carried out in some examples.
S1: Treatment liquid for chemical conversion treatment, having a concentration of a solid content including a silane coupling agent, a silica fine particle, a urethane resin, a phosphoric acid compound, and a fluorine compound, of 10%
S2: Treatment liquid for chemical conversion treatment, having a concentration of a solid content including a Zr compound, a silane coupling agent, a phosphoric acid compound, and a vanadium compound, of 10%

1.3 Formation of Paint Film

Next, in order to form a paint film having a compositional ratio (% by mass) shown in Table 1, each component was mixed so that the solid content concentration was 20% by mass, whereby a coating material for paint film formation was prepared. The zinc-based coated steel sheet or the cold-rolled steel sheet, or the chemical conversion-treated film was coated with the coating material by a bar coater with variations in count of bar coating and rate of dilution so that the average thickness shown in Table 2 was achieved, and the resultant was dried, or dried and heated with an oven under a condition of the maximum achieving temperature (PMT) described in Table 2, whereby a paint film was formed.
In each test example, the zinc-based coated steel sheet after alloying (before paint film formation) was subjected to temper rolling (skin-pass rolling) at a rolling reduction of 0.3%.
The components included in the coating material are shown below.

(Binder Resin)

J1: Epoxy resin (ADEKA RESIN EM-0461N manufactured by ADEKA CORPORATION)
J2: Polyester resin (Vylonal MD1480 manufactured by Vylon Corporation)
J3: Urethane resin (SUPERFLEX 150 manufactured by DKS Co., Ltd.)
J4: Epoxy resin (ADEKA RESIN EP-4100 manufactured by ADEKA CORPORATION)
J5: Polyester resin (Vylon 200 manufactured by Vylon Corporation)
J6: Melamine resin (CYMEL 325 manufactured by Allnex Japan Inc.)
J7: Silane coupling agent (KBE403 manufactured by Shin-Etsu Chemical Co., Ltd.)

(Conductive Pigment)

Z1: Doped zinc oxide particle (23-Kt manufactured by HAKUSUI TECH, average particle size 0.5 $\mu$m)
Z2: Doped zinc oxide particle (23-K manufactured by HAKUSUI TECH, average particle size 0.2 $\mu$m)
Z3: Doped zinc oxide particle (Pazet CK manufactured by HAKUSUI TECH, average particle size 0.03 $\mu$m)
Z4: Zinc oxide particle (general reagent, average particle size 0.5 $\mu$m)
Z5: Titanium nitride particle (general reagent, average particle size 2.0 $\mu$m)

(Rust Inhibitor)

B1: Tannic acid (general reagent) + Zinc naphthenate (general reagent) mixed at a mass ratio of 1:1
B2: Tartaric acid (general reagent) + Zinc naphthenate (general reagent) mixed at a mass ratio of 1:1
B3: Tannic acid (general reagent) + Trizinc phosphate (general reagent) mixed at a mass ratio of 1:1
B4: Tartaric acid (general reagent) + Trizinc phosphate (general reagent) mixed at a mass ratio of 1:1
B5: Colloidal silica (particle size 20 nm)
B6: Aluminum dihydrogen tripolyphosphate (particle size 2 $\mu$m)
B7: Calcium ion-exchanged silica (rate of Ca exchange 9%) (particle size 2 $\mu$m)

(Lubricant)

W1: Polyethylene wax (S-394 MG manufactured by CHEMBASE Co., Ltd.)
W2: Microcrystalline wax (Hi-Mic-1090 manufactured by NIPPON SEIRO CO., LTD.)
W2: Polytetrafluoroethylene (PTFE) particle (SST-1MG-RC manufactured by CHEMBASE Co., Ltd.)

2. Performance Evaluation Tests

The following performance evaluation tests were performed with respect to the surface-treated steel sheet of each example.

2.1 Spot Weldability

Spot welding was performed for 1000 spots with respect to such each surface-treated steel sheet, at a welding current value providing a nugget diameter of 4√t (t = thickness of surface-treated steel sheet) with variation in welding current, at a pressure applied of 1.96 kN for a conducting time of 12 cycles/50 Hz, by use of a CF-type Cr-Cu electrode with a tip diameter of 5 mm and R40. The nugget diameter and the electrode state at the completion of spot welding performed for 1000 spots were observed, and the following scores were imparted. A spot with respect to spot welding causing non-conducting was determined by no formation of any nugget. The presence or absence of a nugget formed, and the nugget diameter were determined by observing a sheet thickness cross section including a spot center.
In a case in which the score was "3", "4", or "5" in such a weldability test, it was determined that weldability was excellent. The results are shown in Table 2.

1: unperformable for 1000 spots

2: performable for 1000 spots, however, non-conducting caused before spot welding for 10 spots or less (including no non-conducting), and a diameter of the electrode contact surface determined with pressure-sensitive paper at the completion of spot welding for 1000 spots, of 1.7 times or more the diameter of the electrode contact surface at the first spot

3: performed for 1000 spots, no non-conducting, and a diameter of the electrode contact surface determined with pressure-sensitive paper at the completion of spot welding for 1000 spots, of 1.4 times or more but less than 1.7 times the diameter of the electrode contact surface at the first spot

4: performed for 1000 spots, no non-conducting, and a diameter of the electrode contact surface determined with pressure-sensitive paper at the completion of spot welding for 1000 spots, of 1.1 times or more but less than 1.4 times the diameter of the electrode contact surface at the first spot

5: performed for 1000 spots, no non-conducting, and a diameter of the electrode contact surface determined with pressure-sensitive paper at the completion of spot welding for 1000 spots, of less than 1.1 times the diameter of the electrode contact surface at the first spot

2.2 Slidability Test

The surface-treated steel sheet of each example was cut to a size of 50 mm × 50 mm. Thereafter, a slidability test was performed with a pin-on-disc friction/wear tester ("RD-100M" manufactured by DAIEI KAGAKU SEIKI MFG. Co., Ltd.). Specifically, the steel sheet was coated with a rust inhibitive oil ("Daphne Super Coat TW" manufactured by Idemitsu Kosan Co., Ltd.), and thereafter placed on the stage of the pin-on-disc-type friction/wear tester, and the change in coefficient of friction, and the respective states of the remaining paint film and plating were confirmed in a test performed at a load of 30 N and a rate of 1 rpm for 10 rotations after rising of the stage temperature and the steel sheet temperature to 50°C.

In a case in which the score was "3", "4", or "5" in such a slidability test, it was determined that slidability was excellent. The results are shown in Table 2.

1: a maximum coefficient of friction of more than 2.0 times the average coefficient of friction at the first rotation

2: a maximum coefficient of friction of from more than 1.5 times to 2.0 times the average coefficient of friction at the first rotation

3: a maximum coefficient of friction of from more than 1.2 times to 1.5 times the average coefficient of friction at the first rotation

4: a maximum coefficient of friction of from more than 1.1 times to 1.2 times the average coefficient of friction at the first rotation

5: a maximum coefficient of friction of 1.1 times or less the average coefficient of friction at the first rotation

2.3 Corrosion Resistance Test

(Advance Preparation)

The surface-treated steel sheet of each example was surface-conditioned with a surface-conditioning/treating agent PREPALENE X (trade name) manufactured by Nippon Parkerizing Co., Ltd., at room temperature for 20 seconds. Furthermore, chemical conversion treatment (phosphate treatment) was performed with a chemical conversion treatment liquid (zinc phosphate treatment liquid) "PALBOND 3020 (trade name)" manufactured by Nippon Parkerizing Co., Ltd. The temperature of the chemical conversion treatment liquid was set to 43°C, and the surface-treated steel sheet was immersed in the chemical conversion treatment liquid for 120 seconds, and thereafter washed with water and dried. After the chemical conversion treatment (phosphate treatment) was performed, electrodeposition-coating with a cationic electrodeposition coating material manufactured by NIPPONPAINT was performed by slop conducting at a voltage of 160 V, and furthermore baking coating was performed at a baking temperature of 170°C for 20 minutes. The average of the thickness of the electrodeposition-paint film after electrodeposition-coating was 10 $\mu$m in each of the samples.

(Corrosion Resistance Test 1)

After the electrodeposition-coating, a damage by cutting was imparted in a cross shape with a cutter until the damage reached the matrix steel sheet of the surface-treated steel sheet, and a corrosion cycle test was performed. The corrosion cycle was performed for 360 cycles, with, as one cycle, salt water spray (SST: Salt Spray Test, 5% NaCl, 35°C atmosphere) for 2 hours, drying (60°C) for 2 hours, and wetting (50°C, 98% RH) for 4 hours.

In a case in which the score was "3", "4", or "5" in such a corrosion resistance test, it was determined that corrosion resistance was excellent. The results are shown in Table 2.

1: generation of red rust from a flat surface portion

2: paint film swelling or generation of white rust from a flat surface portion, or a paint film swelling width from a crosscut portion, of more than 4 mm

3: no generation of rust from a flat surface portion, a paint film swelling width from a crosscut portion, of more than 2 mm to 4 mm

4: no generation of rust from a flat surface portion, a paint film swelling width from a crosscut portion, of more than 1 mm to 2 mm

5: no generation of rust from a flat surface portion, a paint film swelling width from a crosscut portion, of 1 mm or less

The "paint film swelling width" represents the "length of a portion in which the paint film is swollen (namely, the paint film is protruded) in an elongation direction of the damage by cutting".

(Corrosion Resistance Test 2)

A plate-shaped test piece A cut to a size of 70 mm × 150 mm, and a plate-shaped test piece B cut to a size of 30 mm × 100 mm were collected from the surface-treated steel sheet of each example, before the advance preparation was performed.

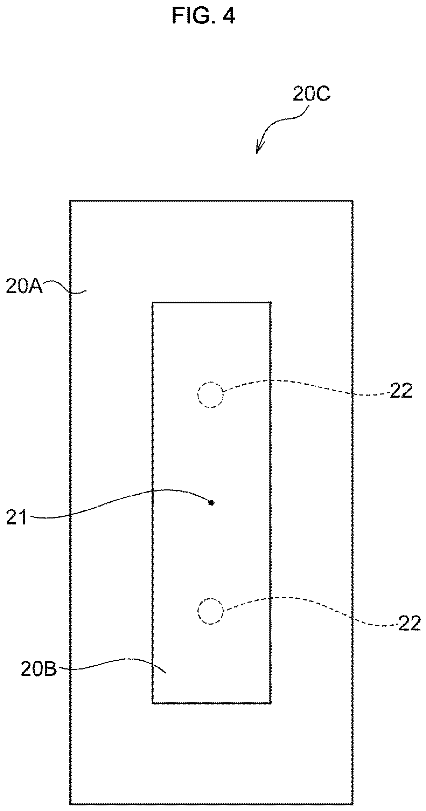

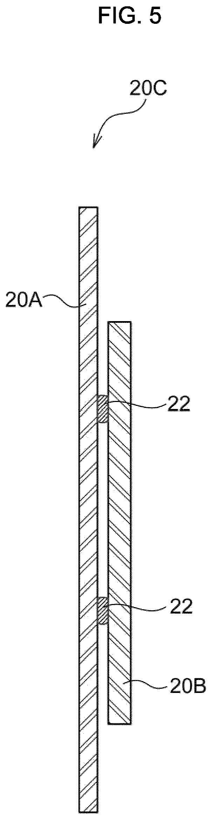

Next, as illustrated in FIG. 4 to FIG. 5, the test piece A and the test piece B were joined by spot welding in a state in which the test piece A and the test piece B were stacked so that the respective centers thereof were overlapped and the respective longitudinal directions thereof were parallel to each other in a plan view, whereby a joining test piece C was produced. The spot welding positions were two positions apart from the center of each of the test piece A and the test piece B toward both sides in the longitudinal direction, by 25 mm. The clearance between the test piece A and the test piece B was adjusted to about 200 $\mu$m with a spacer during spot welding.

Thereafter, the chemical conversion treatment and the electrodeposition-coating in the advance preparation were performed.

Next, a corrosion cycle test was performed with respect to the joining test piece C. The corrosion cycle was performed for 360 cycles, with, as one cycle, salt water spray (SST, 0.5% NaCl, 35°C atmosphere) for 2 hours, drying (60°C) for 2 hours, and wetting (50°C, 98% RH) for 4 hours.

After the corrosion test, a spot-welded portion of the joining test piece C was bored with a drill, and the test piece A was detached from the test piece B.

Next, the test piece A was immersed in an aqueous ammonium citrate solution, thereby removing a corrosion product, and thereafter the corrosion depth in the test piece A was measured. Specifically, the test piece A after removal of the corrosion product was cut into eight equal parts (divided into eight equal parts in total with division into two equal parts to right and left and division into four equal parts up and down in FIG. 4), thereby providing small pieces, and thereafter the corrosion depth (mm) in each of the small pieces was measured. The largest value among the corrosion depths (mm) in these eight small pieces was defined as the maximum corrosion depth (mm), and was evaluated as the result of the corrosion resistance test 2 in the Examples.

The corrosion depth was measured with a micrometer (CPM-MX manufactured by Mitutoyo Corporation).

In a case in which the score was "3", "4", [5], or "6" in such a corrosion resistance test 2, it was determined that corrosion resistance was excellent. The results are shown in Table 2.

1: Maximum corrosion depth: more than 0.4 mm, bore caused

2: Maximum corrosion depth: more than 0.2 mm to 0.4 mm

3: Maximum corrosion depth: more than 0.1 mm to 0.2 mm

4: Maximum corrosion depth: more than 0.05 mm to 0.1 mm

5: Maximum corrosion depth: more than 0 mm to 0.05 mm

6: Maximum corrosion depth: 0 mm

In FIG. 4 to FIG. 5, 20A represents the test piece A, 20B represents the test piece B, 20C represents the joining test piece C, 21 represents each center of the test piece A and the test piece B, and 22 represents the spot-welded portion.

[Table 1]

| Coating material No | Binder resin | | | | | | Conductive pigment | | Rust inhibitor | | | | Lubricant | | Inorganic substance*1 |
| | Resin 1 | | Resin 2 | | Resin 3 | | | | | | | | | | |
| | Type | Compositional ratio (% by mass) | Type | Compositional ratio (% by mass) | Type | Compositional ratio (% by mass) | Type | Compositional ratio (% by mass) | Type | Compositional ratio (% by mass) | Type | Compositional ratio (% by mass) | Type | Compositional ratio (% by mass) | Compositional ratio (% by mass) |
|---|---|---|---|---|---|---|---|---|---|---|---|---|---|---|---|
| 1 | J1 | 89 | - | 0 | - | 0 | Z1 | 0 | B1 | 10 | | | W1 | 1 | 0 |
| 2 | J1 | 88 | - | 0 | - | 0 | Z1 | 1 | B1 | 10 | | | W1 | 1 | 0 |
| 3 | J1 | 84 | - | 0 | - | 0 | Z1 | 5 | B1 | 10 | | | W1 | 1 | 0 |
| 4 | J1 | 79 | - | 0 | - | 0 | Z1 | 10 | B1 | 10 | | | W1 | 1 | 0 |
| 5 | J1 | 74 | - | 0 | - | 0 | Z1 | 15 | B1 | 10 | | | W1 | 1 | 0 |
| 6 | J1 | 69 | - | 0 | - | 0 | Z1 | 20 | B1 | 10 | | | W1 | 1 | 0 |
| 7 | J1 | 59 | - | 0 | - | 0 | Z1 | 30 | B1 | 10 | | | W1 | 1 | 0 |
| 8 | J1 | 79 | - | 0 | - | 0 | Z2 | 10 | B1 | 10 | | | W1 | 1 | 0 |
| 9 | J1 | 79 | - | 0 | - | 0 | Z3 | 10 | B1 | 10 | | | W1 | 1 | 0 |
| 10 | J1 | 79 | - | 0 | - | 0 | Z4 | 10 | B1 | 10 | | | W1 | 1 | more than 1% |
| 11 | J1 | 79 | - | 0 | - | 0 | Z5 | 10 | B1 | 10 | | | W1 | 1 | more than 1% |
| 12 | J1 | 89 | - | 0 | - | 0 | Z1 | 10 | - | 0 | | | W1 | 1 | 0 |
| 13 | J1 | 88 | - | 0 | - | 0 | Z1 | 10 | B1 | 1 | | | W1 | 1 | 0 |
| 14 | J1 | 84 | - | 0 | - | 0 | Z1 | 10 | B1 | 5 | | | W1 | 1 | 0 |
| 15 | J1 | 74 | - | 0 | - | 0 | Z1 | 10 | B1 | 15 | | | W1 | 1 | 0 |
| 16 | J1 | 69 | - | 0 | - | 0 | Z1 | 10 | B1 | 20 | | | W1 | 1 | 0 |
| 17 | J1 | 80 | - | 0 | - | 0 | Z1 | 10 | B1 | 10 | | | - | 0 | 0 |
| 18 | J1 | 79.75 | - | 0 | - | 0 | Z1 | 10 | B1 | 10 | | | W1 | 0.25 | 0 |
| 19 | J1 | 79.5 | - | 0 | - | 0 | Z1 | 10 | B1 | 10 | | | W1 | 0.5 | 0 |
| 20 | J1 | 78 | - | 0 | - | 0 | Z1 | 10 | B1 | 10 | | | W1 | 2 | 0 |
| 21 | J1 | 75 | - | 0 | - | 0 | Z1 | 10 | B1 | 10 | | | W1 | 5 | 0 |

EP 4 692 410 A1

18

| Coating material No | Binder resin | | | | | | Conductive pigment | | Rust inhibitor | | | | Lubricant | | Inorganic substance*1 |
|---|---|---|---|---|---|---|---|---|---|---|---|---|---|---|---|
| | Resin 1 | | Resin 2 | | Resin 3 | | | | | | | | | | |
| | Type | Compositional ratio (% by mass) | Type | Compositional ratio (% by mass) | Type | Compositional ratio (% by mass) | Type | Compositional ratio (% by mass) | Type | Compositional ratio (% by mass) | Type | Compositional ratio (% by mass) | Type | Compositional ratio (% by mass) | Compositional ratio (% by mass) |
| 22 | J1 | 79 | - | 0 | - | 0 | Z1 | 10 | B2 | 10 | | | W1 | 1 | 0 |
| 23 | J1 | 79 | - | 0 | - | 0 | Z1 | 10 | B3 | 10 | | | W1 | 1 | 0 |
| 24 | J1 | 79 | - | 0 | - | 0 | Z1 | 10 | B4 | 10 | | | W1 | 1 | 0 |
| 25 | J1 | 79 | - | 0 | - | 0 | Z1 | 10 | B5 | 10 | | | W1 | 1 | more than 1% |
| 26 | J1 | 79 | - | 0 | - | 0 | Z1 | 10 | B6 | 10 | | | W1 | 1 | more than 1% |
| 27 | J1 | 79 | - | 0 | - | 0 | Z1 | 10 | B7 | 10 | | | W1 | 1 | more than 1% |
| 28 | J1 | 79 | - | 0 | - | 0 | Z1 | 10 | B1 | 10 | | | W2 | 1 | 0 |
| 29 | J1 | 79 | - | 0 | - | 0 | Z1 | 10 | B1 | 10 | | | W3 | 1 | 0 |
| 30 | J2 | 72 | J6 | 7 | - | 0 | Z1 | 10 | B1 | 10 | | | W1 | 1 | 0 |
| 31 | J3 | 74 | J7 | 5 | - | 0 | Z1 | 10 | B1 | 10 | | | W1 | 1 | 0 |
| 32 | J4 | 79 | - | 0 | - | 0 | Z1 | 10 | B1 | 10 | | | W1 | 1 | 0 |
| 33 | J5 | 72 | J6 | 7 | - | 0 | Z1 | 10 | B1 | 10 | | | W1 | 1 | 0 |
| 34 | J1 | 54 | J2 | 20 | J6 | 5 | Z1 | 10 | B1 | 10 | | | W1 | 1 | 0 |
| 35 | J1 | 57 | J3 | 20 | J7 | 2 | Z1 | 10 | B1 | 10 | | | W1 | 1 | 0 |

[Table 2-1]

| N o | Type of plati ng | Amou nt attach ed (g/m2) | Alloying temperat ure (°C) | Alloy ing time (h) | ζ/δ | ζ/Γ | Typ e | Amou nt attach ed | Coatin g materi al No | Averag e thickne ss (μm) | Surface s roughne ss Ra(μm) | PMT (°C) | Ratio of maximu m thickne ss and minimu m thickne ss | Weldabil ity | Slidabili ty | Corrosi on resistan ce 1 | Corrosi on resistan ce 2 | |
|---|---|---|---|---|---|---|---|---|---|---|---|---|---|---|---|---|---|---|
| | | | **Coated steel sheet** | | | | **Intermediate layer** | | | | **Paint film** | | | | **Evaluation results** | | | |
| 1 | ZA | 45 | 480 | 26 | 0.3 | 5.0 | - | 0 | 1 | 2 | 1.2 | 100 | 20 | 3 | 5 | 4 | 6 | Example |
| 2 | ZA | 45 | 480 | 26 | 0.3 | 5.0 | - | 0 | 2 | 2 | 1.2 | 100 | 20 | 3 | 5 | 4 | 6 | Example |
| 3 | ZA | 45 | 480 | 26 | 0.3 | 5.0 | - | 0 | 3 | 2 | 1.1 | 100 | 20 | 4 | 5 | 4 | 6 | Example |
| 4 | ZA | 45 | 480 | 26 | 0.3 | 5.0 | - | 0 | 4 | 2 | 1.2 | 100 | 20 | 5 | 5 | 4 | 6 | Example |
| 5 | ZA | 45 | 480 | 26 | 0.3 | 5.0 | - | 0 | 5 | 2 | 1.1 | 100 | 20 | 5 | 5 | 4 | 6 | Example |
| 6 | ZA | 45 | 480 | 26 | 0.3 | 5.0 | - | 0 | 6 | 2 | 1.3 | 100 | 15 | 5 | 5 | 3 | 5 | Example |
| 7 | ZA | 45 | 480 | 26 | 0.3 | 5.0 | - | 0 | 7 | 2 | 1.2 | 100 | 10 | 4 | 3 | 3 | 6 | Example |
| 8 | ZA | 45 | 480 | 26 | 0.3 | 5.0 | - | 0 | 8 | 2 | 1.2 | 100 | 20 | 4 | 5 | 4 | 6 | Example |
| 9 | ZA | 45 | 480 | 26 | 0.3 | 5.0 | - | 0 | 9 | 2 | 1.1 | 100 | 20 | 4 | 5 | 4 | 6 | Example |
| 10 | ZA | 45 | 480 | 26 | 0.3 | 5.0 | - | 0 | 10 | 2 | 1.1 | 100 | 20 | 3 | 5 | 4 | 6 | Example |
| 11 | ZA | 45 | 480 | 26 | 0.3 | 5.0 | - | 0 | 11 | 2 | 1.3 | 100 | 20 | 3 | 5 | 3 | 5 | Example |
| 12 | ZA | 45 | 480 | 26 | 0.3 | 5.0 | - | 0 | 12 | 2 | 1.2 | 100 | 20 | 5 | 5 | 3 | 5 | Example |
| 13 | ZA | 45 | 480 | 26 | 0.3 | 5.0 | - | 0 | 13 | 2 | 1.1 | 100 | 20 | 5 | 5 | 3 | 5 | Example |
| 14 | ZA | 45 | 480 | 26 | 0.3 | 5.0 | - | 0 | 14 | 2 | 1.1 | 100 | 20 | 5 | 5 | 4 | 6 | Example |
| 15 | ZA | 45 | 480 | 26 | 0.3 | 5.0 | - | 0 | 15 | 2 | 1.2 | 100 | 18 | 4 | 5 | 4 | 6 | Example |
| 16 | ZA | 45 | 480 | 26 | 0.3 | 5.0 | - | 0 | 16 | 2 | 1.2 | 100 | 12 | 3 | 5 | 5 | 6 | Example |
| 17 | ZA | 45 | 480 | 26 | 0.3 | 5.0 | - | 0 | 17 | 2 | 1.1 | 100 | 20 | 5 | 2 | 4 | 6 | Comparati ve Example |
| 18 | ZA | 45 | 480 | 26 | 0.3 | 5.0 | - | 0 | 18 | 2 | 1.3 | 100 | 20 | 5 | 2 | 4 | 6 | Comparati ve Example |
| 19 | ZA | 45 | 480 | 26 | 0.3 | 5.0 | - | 0 | 19 | 2 | 1.3 | 100 | 20 | 5 | 3 | 4 | 6 | Example |
| 20 | ZA | 45 | 480 | 26 | 0.3 | 5.0 | - | 0 | 20 | 2 | 1.1 | 100 | 20 | 5 | 5 | 3 | 5 | Example |
| 21 | ZA | 45 | 480 | 26 | 0.3 | 5.0 | - | 0 | 21 | 2 | 1.2 | 100 | 20 | 4 | 5 | 2 | 4 | Comparati ve Example |
| 22 | ZA | 45 | 480 | 26 | 0.3 | 5.0 | - | 0 | 22 | 2 | 1.1 | 100 | 20 | 5 | 5 | 4 | 6 | Example |

(continued)

| No | Type of plati ng | Amou nt attach ed (g/m2) | Alloying temperat ure (°C) | Alloy ing time (h) | $\zeta/\delta$ | $\zeta/\Gamma$ | Typ e | Amou nt attach ed | Coatin g materi al No | Averag e thickne ss ($\mu$m) | Surface s roughne ss Ra($\mu$m) | PMT (°C) | Ratio of maximu m thickne ss and minimu m thickne ss | Weldabil ity | Slidabili ty | Corrosi on resistan ce 1 | Corrosi on resistan ce 2 | |
|---|---|---|---|---|---|---|---|---|---|---|---|---|---|---|---|---|---|---|
| | | | Coated steel sheet | | | | Intermediate layer | | Paint film | | | | | Evaluation results | | | | |
| 23 | ZA | 45 | 480 | 26 | 0.3 | 5.0 | - | 0 | 23 | 2 | 1.2 | 100 | 20 | 5 | 5 | 4 | 6 | Example |
| 24 | ZA | 45 | 480 | 26 | 0.3 | 5.0 | - | 0 | 24 | 2 | 1.1 | 100 | 20 | 5 | 5 | 4 | 6 | Example |
| 25 | ZA | 45 | 480 | 26 | 0.3 | 5.0 | - | 0 | 25 | 2 | 1.3 | 100 | 10 | 3 | 4 | 3 | 5 | Example |
| 26 | ZA | 45 | 480 | 26 | 0.3 | 5.0 | - | 0 | 26 | 2 | 1.1 | 100 | 10 | 3 | 4 | 4 | 6 | Example |
| 27 | ZA | 45 | 480 | 26 | 0.3 | 5.0 | - | 0 | 27 | 2 | 1.1 | 100 | 20 | 3 | 5 | 4 | 6 | Example |
| 28 | ZA | 45 | 480 | 26 | 0.3 | 5.0 | - | 0 | 28 | 2 | 1.1 | 100 | 20 | 5 | 5 | 3 | 5 | Example |
| 29 | ZA | 45 | 480 | 26 | 0.3 | 5.0 | - | 0 | 29 | 2 | 1.2 | 100 | 20 | 4 | 4 | 4 | 6 | Example |
| 30 | ZA | 45 | 480 | 26 | 0.3 | 5.0 | - | 0 | 30 | 2 | 1.1 | 200 | 20 | 5 | 4 | 4 | 6 | Example |
| 31 | ZA | 45 | 480 | 26 | 0.3 | 5.0 | - | 0 | 31 | 2 | 1.2 | 100 | 20 | 5 | 4 | 4 | 6 | Example |
| 32 | ZA | 45 | 480 | 26 | 0.3 | 5.0 | - | 0 | 32 | 2 | 1.3 | 200 | 20 | 5 | 4 | 4 | 6 | Example |
| 33 | ZA | 45 | 480 | 26 | 0.3 | 5.0 | - | 0 | 33 | 2 | 1.2 | 200 | 20 | 5 | 4 | 3 | 5 | Example |
| 34 | ZA | 45 | 480 | 26 | 0.3 | 5.0 | - | 0 | 34 | 2 | 1.1 | 200 | 20 | 5 | 4 | 4 | 6 | Example |
| 35 | ZA | 45 | 480 | 26 | 0.3 | 5.0 | - | 0 | 35 | 2 | 1.1 | 100 | 20 | 5 | 4 | 4 | 6 | Example |

[Table 2-2]

| No | Coated steel sheet | | | | | | Intermediate layer | | Paint film | | | | | Evaluation results | | | | |
|---|---|---|---|---|---|---|---|---|---|---|---|---|---|---|---|---|---|---|
| | Type of plating | Amount attached g/m2 | Alloying temperature °C | Alloying time h | ζ/δ | ζ/Γ | Type | Amount attached | Coating material No | Average thickness | Roughness μm | PMT | Ratio of maximum thickness and minimum thickness | Weldability | Slidability | Corrosion resistance 1 | Corrosion resistance 2 | |
| 36 | ZA | 45 | 480 | 26 | 0.3 | 5.0 | S1 | 0.1 | 4 | 2 | 1.1 | 100 | 20 | 5 | 5 | 4 | 6 | Example |
| 37 | ZA | 45 | 480 | 26 | 0.3 | 5.0 | S1 | 0.3 | 4 | 2 | 1.1 | 100 | 20 | 5 | 5 | 5 | 6 | Example |
| 38 | ZA | 45 | 480 | 26 | 0.3 | 5.0 | S1 | 0.5 | 4 | 2 | 1.1 | 100 | 20 | 5 | 5 | 5 | 6 | Example |
| 39 | ZA | 45 | 480 | 26 | 0.3 | 5.0 | S2 | 0.1 | 4 | 2 | 1.1 | 100 | 20 | 5 | 5 | 4 | 6 | Example |
| 40 | ZA | 45 | 480 | 26 | 0.3 | 5.0 | S2 | 0.3 | 4 | 2 | 1.1 | 100 | 20 | 5 | 5 | 4 | 6 | Example |
| 41 | ZA | 45 | 480 | 26 | 0.3 | 5.0 | S2 | 0.5 | 4 | 2 | 1.1 | 100 | 20 | 4 | 5 | 5 | 6 | Example |
| 42 | ZA | 45 | 470 | 32 | 0.4 | 12.0 | - | 0 | 1 | 2 | 1.4 | 100 | 40 | 4 | 3 | 3 | 6 | Example |
| 43 | ZA | 45 | 460 | 34 | 0.5 | 21.0 | - | 0 | 1 | 2 | 1.6 | 100 | 110 | 4 | 2 | 2 | 6 | Comparative |
| 44 | ZA | 45 | 500 | 22 | 0.2 | 3.5 | - | 0 | 1 | 2 | 1.0 | 100 | 15 | 3 | 5 | 4 | 6 | Example |
| 45 | ZA | 45 | 510 | 24 | 0.1 | 1.2 | - | 0 | 1 | 2 | 0.8 | 100 | 10 | 3 | 5 | 4 | 3 | Example |
| 46 | ZA | 45 | 520 | 24 | 0.05 | 0.5 | - | 0 | 1 | 2 | 0.7 | 100 | 5 | 2 | 5 | 4 | 4 | Comparative |
| 47 | ZA | 45 | 530 | 24 | 0.0 | 0.0 | - | 0 | 1 | 2 | 0.6 | 100 | 3 | 2 | 5 | 4 | 2 | Example |
| 48 | ZA | 45 | 480 | 26 | 0.3 | 5.0 | - | 0 | 4 | 0.1 | 1.5 | 100 | 200 | 5 | 3 | 2 | 2 | Comparative |
| 49 | ZA | 45 | 480 | 26 | 0.3 | 5.0 | - | 0 | 4 | 0.5 | 1.3 | 100 | 60 | 5 | 5 | 3 | 4 | Example |
| 50 | ZA | 45 | 480 | 26 | 0.3 | 5.0 | - | 0 | 4 | 1 | 1.2 | 100 | 40 | 5 | 5 | 4 | 5 | Example |
| 51 | ZA | 45 | 480 | 26 | 0.3 | 5.0 | - | 0 | 4 | 3 | 1.1 | 100 | 15 | 4 | 5 | 5 | 6 | Example |
| 52 | ZA | 45 | 480 | 26 | 0.3 | 5.0 | - | 0 | 4 | 5 | 0.7 | 100 | 5 | 2 | 4 | 5 | 6 | Comparative |
| 53 | ZA | 30 | 480 | 20 | 0.3 | 5.0 | - | 0 | 4 | 2 | 1.1 | 100 | 20 | 5 | 5 | 4 | 6 | Example |
| 54 | ZA | 60 | 480 | 32 | 0.3 | 5.0 | - | 0 | 4 | 2 | 1.1 | 100 | 20 | 5 | 5 | 4 | 6 | Example |
| 55 | ZA | 90 | 480 | 42 | 0.3 | 5.0 | - | 0 | 4 | 2 | 1.2 | 100 | 20 | 5 | 5 | 4 | 6 | Example |

(continued)

| No | Type of plating | Coated steel sheet | | | | | Intermediate layer | | Paint film | | | | | Evaluation results | | | | |
|----|----|----|----|----|----|----|----|----|----|----|----|----|----|----|----|----|----|----|
| | | Amount attached g/m2 | Alloying temperature °C | Alloying time h | ζ/δ | ζ/Γ | Type | Amount attached | Coating material No | Average thickness | Roughness μm | PMT | Ratio of maximum thickness and minimum thickness | Weldability | Slidability | Corrosion resistance 1 | Corrosion resistance 2 | |
| 56 | ZB | 45 | - | - | - | - | - | 0 | 4 | 2 | 0.4 | 100 | 1.5 | 2 | 4 | 4 | 6 | Comparative Example |
| 57 | ZC | 45 | - | - | - | - | - | 0 | 4 | 2 | 0.8 | 100 | 15 | 3 | 4 | 5 | 6 | Example |
| 58 | ZD | 45 | - | - | - | - | - | 0 | 4 | 2 | 0.6 | 100 | 1.2 | 2 | 4 | 4 | 4 | Comparative Example |
| 59 | ZE | 45 | - | - | - | - | - | 0 | 4 | 2 | 0.8 | 100 | 10 | 4 | 5 | 3 | 4 | Example |
| 60 | C | - | - | - | - | - | - | 0 | 4 | 2 | 0.4 | 100 | 1.5 | 2 | 5 | 1 | 1 | Comparative Example |
| 61 | ZA | 45 | 510 | 23 | 0.1 | 1.4 | - | 0 | 1 | 2 | 0.8 | 100 | 11 | 3 | 5 | 4 | 3 | Example |
| 62 | ZA | 45 | 510 | 22 | 0.1 | 1.6 | - | 0 | 1 | 2 | 0.8 | 100 | 12 | 3 | 5 | 4 | 3 | Example |
| 63 | ZA | 45 | 505 | 23 | 0.126 | 2.0 | - | 0 | 1 | 2 | 0.9 | 100 | 12 | 3 | 5 | 4 | 5 | Example |
| 64 | ZA | 45 | 505 | 22 | 0.1 | 2.4 | - | 0 | 1 | 2 | 0.9 | 100 | 13 | 3 | 5 | 4 | 5 | Example |
| 65 | ZA | 45 | 500 | 23 | 0.2 | 3.0 | - | 0 | 1 | 2 | 1.0 | 100 | 13 | 3 | 5 | 4 | 5 | Example |

It can be seen from the above results that the surface-treated steel sheets of the Examples are excellent in all corrosion resistance, weldability, and slidability as compared with the surface-treated steel sheets of Comparative Examples.

In Table 1, the designation "Inorganic substance* 1" represents the compositional ratio of "Zn-containing compound that includes a doped zinc oxide particle" with respect to the paint film.

The disclosure of Japanese Patent Application No. 2023-056125 is herein incorporated by reference in its entirety.

All literature, patent applications, and technical standards described herein are herein incorporated by reference, as if each individual literature, patent application, and technical standard were specifically and individually indicated to be incorporated by reference.

## Claims

1. surface-treated steel sheet, comprising:

     a zinc-based coated steel sheet; and
     a paint film placed on at least one main surface of the zinc-based coated steel sheet, wherein:

        an average thickness of the paint film is from 0.5 $\mu$m to 3 $\mu$m,
        the paint film comprises a binder resin and from 0.5 to 2.0% by mass of a lubricant, and
        a ratio of a maximum thickness to a minimum thickness of the paint film is from 10 times to 100 times.

2. The surface-treated steel sheet according to claim 1, wherein:

     the zinc-based coated steel sheet is an alloyed molten galvanized steel sheet, and
     a ratio $\zeta/\delta$ of a $\zeta$ phase to a $\delta$ phase in the alloyed molten galvanized layer is from 0.1 to 0.4.

3. The surface-treated steel sheet according to claim 1, wherein:

     the paint film comprises the binder resin, a conductive pigment, the lubricant, and a rust inhibitor,
     the conductive pigment is a doped oxide particle,
     an average particle size of the conductive pigment is from 0.1 $\mu$m to 2 $\mu$m, and
     a content of the conductive pigment is from 2 to 30% by mass with respect to the paint film.

4. The surface-treated steel sheet according to claim 3, wherein the doped oxide particle is a doped zinc oxide particle.

5. The surface-treated steel sheet according to claim 3, wherein the lubricant is polyolefin wax.

6. The surface-treated steel sheet according to claim 3, wherein the rust inhibitor is an organic acid.

7. The surface-treated steel sheet according to claim 1, wherein the paint film does not comprise an inorganic substance other than a Zn-containing compound that includes a doped zinc oxide particle, or comprises 1% by mass or lower of the inorganic substance with respect to the paint film even in a case of comprising the inorganic substance.

8. The surface-treated steel sheet according to claim 1, wherein a surface roughness Ra of the paint film is from 0.1 to 10 $\mu$m.

## FIG. 1

## FIG. 2

## FIG. 3

# FIG. 4

# FIG. 5

## INTERNATIONAL SEARCH REPORT

| International application No. |
|---|
| **PCT/JP2024/013329** |

| A. | CLASSIFICATION OF SUBJECT MATTER |
|---|---|

*C23C 2/06*(2006.01)i; *B32B 15/08*(2006.01)i; *B32B 27/18*(2006.01)i
FI: C23C2/06; B32B15/08 A; B32B27/18 E; B32B27/18 J

According to International Patent Classification (IPC) or to both national classification and IPC

| B. | FIELDS SEARCHED |
|---|---|

Minimum documentation searched (classification system followed by classification symbols)

C23C2/06; B32B15/08; B32B27/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-73977 A (JFE STEEL CORP.) 17 May 2022 (2022-05-17)<br>entire text | 1-8 |
| A | JP 7001209 B1 (NIPPON STEEL CORPORATION) 19 January 2022 (2022-01-19)<br>entire text | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 692 410 A1

**INTERNATIONAL SEARCH REPORT**
Information on patent family members

International application No.

**PCT/JP2024/013329**

| Patent document cited in search report | | | Publication date (day/month/year) | Patent family member(s) | | | Publication date (day/month/year) |
|---|---|---|---|---|---|---|---|
| JP | 2022-73977 | A | 17 May 2022 | WO | 2022/091851 | A1 | |
| | | | | entire text | | | |
| | | | | TW | 202225425 | A | |
| | | | | CN | 116507754 | A | |
| | | | | KR 10-2023-0082045 | | A | |
| | | | | AU | 2021368356 | A | |
| JP | 7001209 | B1 | 19 January 2022 | WO | 2022/190173 | A1 | |
| | | | | entire text | | | |
| | | | | CN | 116940711 | A | |
| | | | | KR 10-2023-0143181 | | A | |
| | | | | AU | 2021432360 | A | |

Form PCT/ISA/210 (patent family annex) (July 2022)

30

**REFERENCES CITED IN THE DESCRIPTION**

**Patent documents cited in the description**

- WO 2018092244 A

- JP 2023056125 A